# FASCICULE DE BREVET EUROPEEN

(11) **EP 2 601 140 B1**
(45) Date de publication et mention de la délivrance du brevet: **04.03.2020**
(21) Numéro de dépôt: 11757381.6
(22) Date de dépôt: 02.08.2011
(51) Int. Cl.: C01G 25/00, C01G 25/04, C01G 27/00, C01G 27/04, C22B 34/14, C22B 3/42

(54) **PROCEDE DE SEPARATION DES TETRACHLORURES DE ZIRCONIUM ET D'HAFNIUM DE LEURS MELANGES**
VERFAHREN ZUR ABSCHEIDUNG VON ZIRKON- UND HAFNIUMTETRACHLORIDEN AUS MISCHUNGEN DARAUS
PROCESS FOR SEPARATING ZIRCONIUM AND HAFNIUM TETRACHLORIDES FROM MIXTURES THEREOF

(30) Priorité: 02.08.2010 FR 1003230
(43) Date de publication de la demande: 12.06.2013
(73) Titulaire: Centre National de la Recherche Scientifique, 75794 Paris Cedex 16 (FR)
(72) Inventeur: SANTINI-SCAMPUCCI, Catherine, F-69660 Collonges au Mont d'Or (FR); CHAUVIN, Yves, F-37000 Tours (FR); CAMPBELL, Paul, 44801 Bochum (DE)
(74) Mandataire: Lavoix
(86) Numéro de dépôt international: PCT/FR2011/051863
(87) Numéro de publication internationale: WO 2012/017181

(56) Documents cités:
- FR-A1- 2 250 707
- US-A- 2 816 814
- US-A- 2 892 681
- US-A- 3 395 976
- US-A- 4 231 994
- US-A1- 2004 011 739
- CALDERAZZO F ET AL: "eta<6>-Arene derivatives of titanium(IV), zirconium(IV) and hafnium(IV)", JOURNAL OF ORGANOMETALLIC CHEMISTRY, ELSEVIER-SEQUOIA S.A. LAUSANNE, CH, vol. 518, no. 1, 12 juillet 1996 (1996-07-12), pages 189-196, XP004035872, ISSN: 0022-328X, DOI: DOI:10.1016/0022-328X(96)06194-3 cité dans la demande
- CAMPBELL PAUL S ET AL: "Exploiting the solvation properties of ionic liquids: A novel approach for the separation of zirconium from hafnium", CHIMICA OGGI, TEKNOSCIENZE, MILANO, IT, vol. 28, no. 4, 1 July 2010 (2010-07-01), pages 36-39, XP008167400, ISSN: 0392-839X

## Description

La présente invention concerne un procédé de séparation des tétrachlorures de zirconium et d'hafnium de leurs mélanges tels qu'ils sont obtenus par chloration directe de leurs minerais.

Les minerais de zirconium tel la zircone contiennent de l' hafnium dans des proportions qui se situent entre 1 et 3% mais qui peuvent atteindre 20%. Or les aiguilles de zirconium ou de ses alliages qui contiennent, par exemple, des oxydes d'uranium et/ou de plutonium dans les réacteurs nucléaires nécessitent l'élimination aussi complète que possible de l'hafnium qui a la propriété d'absorber fortement les neutrons. Le plus souvent, la teneur en hafnium doit être inférieure à 200 ppm, voire 100 ppm. Et réciproquement, dans certaines parties de réacteurs (ralentisseurs) la teneur du zirconium en hafnium doit être inférieure à 4,5 %.

Les composés du zirconium et de l'hafnium ont des propriétés physiques et chimiques très voisines ; les méthodes de séparation proposées sont nombreuses. Parmi celles qui sont utilisées industriellement on trouve l'extraction liquide-liquide ou aqueuse (N. Ozanne, M. L. Lemaire, A. Guy, J. Foos, S. Pellet-Rostaing, F. Chitry, WO, Compagnie Européenne du Zirconium Cezus, Fr., 20010910. 2002, 23 pp. ; Oriel, L.; Favre-Reguillon, A.; Pellet-Rostaing, S.; Lemaire, M. Zirconium and hafnium séparation, part 1. Liquid/liquid extraction in hydrochloric acid aqueous solution with Aliquat 336. Séparation Science and Technology (2006), 41(9), 1927-1940.), la cristallisation fractionnée de solutions aqueuses de fluorozirconate (A highly efficient method for séparation of zirconium and hafnium. Ogarev, Vadim; Skotnicki, Antek; Ninham, Barry. (Australia). Aust. Pat. Appl. (2009), 12pp. CODEN: AUXXCM AU 2008202451 A1 20090108) et de fluorohafnate alcalins ou la distillation extractive des chlorures au moyen d'un chloroaluminate alcalin aux alentours de 360°C (L. Delons, G. Picard, D. Tigreat, Compagnie Européenne Du Zirconium Cezus, WO 20020412. 2002, 20 pp. ; [L. Delons, S. Lagarde, A. Favre Reguillon, S. Pellet Rostaing, M. Lemaire, L. Poriel, Compagnie Européenne du Zirconium-Cezus, Fr.) Fr 2004-7721 2006, 40.). Bien que sélectifs ces procédés souffrent de différents inconvénients. Ainsi l'extraction efficace d'une phase aqueuse par la méthyléthyl cétone conduit à l'hydrolyse les chlorures en oxychlorures qu'il faut alors re-chlorer pour permettre leur réduction par le magnésium, par exemple. La seconde est coûteuse en main-d'œuvre, en investissement, en réactifs et en énergie. Enfin la troisième, bien que plus simple opère à des températures si élevées qu'elle conduit à une corrosion considérable contraignant à de fréquents changements des plateaux et des internes de la colonne de distillation. Les documents US 3 395 976 A, FR 2 250 707 A1, US 2 816 814 A sont aussi des exemples des méthodes de séparation du zirconium et de l'hafnium telles que citées ci-dessus.

Il est bien connu que les hydrocarbures aromatiques forment avec les acides de Lewis, le plus étudié d'entre eux étant sans doute le chlorure d'aluminium, des complexes arénium dont la stabilité est d'autant plus grande que l'aromatique est plus basique, par exemple quand il contient un nombre plus élevé de groupements méthyles. C'est aussi le cas des tétrachlorures de zirconium et d'hafnium. Mais dans ces derniers cas, l'hexaméthylbenzène pris pour exemple, réagit avec le tétrachlorure de zirconium pour conduire à un complexe *moléculaire* binucléaire de formule Zr(η⁶-Me₆C₆)Cl₂(µ-Cl)₃ZrCl₃ (F. Musso, E. Solari, C. Floriani, K. Schenk, *Organometallics* 1997, 16, 4889) alors que le tétrachlorure d'hafnium conduit à un complexe *ionique* binucléaire de formule [Hf(η⁶-Me₆C₆)Cl₃]⁺[Hf₂Cl₉]⁻ (F. Calderazzo, I. Ferri, G. Pampaloni, S. Troyanov, J. Organomet. Chem. 1996, 518, 189 ; F. Calderazzo, P. Pallavicini, G. Pampaloni, P. F. Zanazzi, J. Chem. Soc., Dalton Trans. 1990, 2743).

A ce jour il n'existe aucun procédé efficace, peu couteux et opérant à des températures suffisamment basses pour ne pas entraîner de corrosion.

Un des aspects de l'invention est de proposer un procédé de séparation industriel simple, peu couteux et non corrosif permettant de séparer des tétrachlorures de zirconium et d'hafnium de leurs mélanges.

Un autre aspect de l'invention est de proposer un procédé industriel simple permettant la séparation zirconium/hafnium.

Un autre aspect de l'invention est de proposer un procédé permettant de produire des fractions enrichies en zirconium et contenant de l'hafnium à l'état de trace.

Ces différents aspects ont pu être obtenus par la mise en œuvre d'une extraction liquide-liquide en absence rigoureuse d'eau à une température inférieure à 100°C en utilisant des liquides ioniques, ce qui évite d'une part les problèmes de corrosion et d'autre part permet de récupérer directement sous forme de chlorures, le zirconium et l' hafnium, au degré de pureté voulu.

L'invention a donc plus précisément pour objet l'utilisation d'un liquide ionique, dont le point de fusion est inférieur à 100°C, et à anion non nucléophile, dans des conditions anhydres, pour la mise en œuvre d'un procédé de séparation entre du tétrachlorure d'hafnium et du tétrachlorure de zirconium, à partir d'un mélange de complexes : tétrachlorure de Zr/ composé aromatique et tétrachlorure d'Hf/ composé aromatique, par extraction liquide-liquide, avec un enrichissement Zr/Hf d'au moins 100/1 (exprimé en masse par rapport aux susdits complexes).

Les Inventeurs ont constaté de façon surprenante, que l'extraction liquide-liquide à l'aide d'un liquide ionique permettait de séparer totalement les deux complexes respectifs de tétrachlorure de Zr/composé aromatique et de tétrachlorure d'Hf/composé aromatique, rendant ainsi possible une séparation à l'échelle industrielle en une seule étape.

En effet, en dépit de la connaissance de la nature moléculaire du complexe tétrachlorure de Zr/composé aromatique et de la nature ionique du complexe de tétrachlorure d'Hf/composé aromatique, la mise en présence de ces deux complexes dans un liquide ionique n'avait jamais été effectuée et *a fortiori* le comportement de ce mélange dans un tel milieu n'était pas prévisible.

L'anion du liquide ionique utilisé est non nucléophile pour ne pas modifier la structure des complexes formés.

Selon un aspect de l'invention, le susdit mélange de complexes provient de la réaction d'un composé aromatique sur un mélange de départ de ZrCl₄ et de HfCl₄.

Selon un autre aspect, ce mélange de départ peut être issu de la carbochloration du minerai zircon, lequel contient habituellement un rapport : pourcentage en poids Hf/Zr de 1/99 à 3/97. Ce mélange de départ de ZrCl₄ et de HfCl₄ peut avoir subi un ou plusieurs traitements destinés à éliminer certains métaux ou impuretés.

Selon un mode de réalisation avantageux de l'invention, l'extraction liquide-liquide est effectuée avec un hydrocarbure ou un mélange d'hydrocarbures.

En d'autres termes, l'extraction liquide-liquide implique d'une part les « liquides ioniques » c'est-à-dire des paires d'ions dont le point de fusion est inférieur à 100°C et d'autre part des hydrocarbures ou des mélanges d'hydrocarbures, ces deux types de liquides étant choisis comme peu miscibles entre eux et de préférence non miscibles entre eux, pour permettre la formation de deux phases : une phase de liquide ionique et une phase d'hydrocarbures.

Selon au autre mode de réalisation avantageux de l'invention, la température à laquelle est effectué le procédé de séparation est inférieure à environ 100°C, et est notamment d'environ 15 à environ 35°C.

La possibilité de travailler à une température dans une gamme de valeurs correspondant à la température ambiante, évite les problèmes de corrosion.

Selon un mode de réalisation avantageux de l'invention, le composé aromatique impliqué respectivement dans les deux complexes respectifs de tétrachlorure de Zr/composé aromatique et de tétrachlorure d'Hf/composé aromatique répond à la formule suivante : 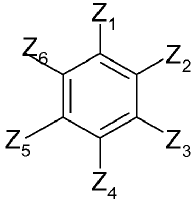 dans laquelle Z₁, Z₂, Z₃, Z₄, Z₅ et Z₆ représentent indépendamment les uns des autres :
- un atome d'hydrogène,
- un alkyl linéaire ou ramifié contenant de 1 à 20 notamment de 1 à 12 atomes de carbones, ou
- un aryle.

Le composé aromatique avantageusement utilisé dans l'invention est l'hexaméthylbenzène qui peut être remplacé par tout autre aromatique comme le toluène, les xylènes, les tétraméthyl benzènes le pentaméthylbenzène.

Le composé aromatique est tel qu'il est apte à donner un complexe d'hafnium ionique binucléaire de formule [Hf(η⁶-Me₆C₆)Cl₃]⁺[Hf₂Cl₉] est un composé moléculaire binucléaire de formule Zr(η⁶-Me₆C₆)Cl₂(µ-Cl)₃ZrCl₃ à partir d'un mélange de tétrachlorure d'hafnium et de zirconium.

Le mélange de complexes : tétrachlorure de Zr/ composé aromatique et tétrachlorure d'Hf/ composé aromatique peut être soit en solution dans un solvant, tel que le toluène soit sous forme de composition solide.

Selon un mode de réalisation avantageux de l'invention, le liquide ionique est un mélange notamment stœchiométrique d'un ou plusieurs chlorures d'ammonium et d'un ou plusieurs chlorures métalliques.

Le mélange défini précédemment est avantageusement un mélange stœchiométrique.

Il n'y a pas d'intérêt à mettre en œuvre un excès d'acide de Lewis qui entrerait en compétition avec l'hydrocarbure ni un excès de base qui entrerait en compétition avec l'acide de Lewis d'où l'emploi de composés stœchiométriques « neutres ». En d'autres termes, l'utilisation d'un liquide ionique à anion non nucléophile est nécessaire conformément à ce qui a été dit précédemment.

Selon un mode de réalisation avantageux de l'invention, dans les liquides ioniques utilisés le ou les chlorures métalliques sont choisis parmi le trichlorure d'aluminium, le chlorure de zinc, le tétrachlorure de zirconium, le tétrachlorure d'hafnium, le chlorure ferreux, le chlorure ferrique, le trichlorure de bore, le trichlorure de gallium, le chlorure cuivrique, le chlorure cuivreux, le tétrachlorure de titane, le trichlorure de cadmium, le dichlorure de cobalt, le dichlorure d'étain, le tétrachlorure d'étain, le trichlorure d'antimoine ou leurs mélanges.

Selon un mode de réalisation avantageux de l'invention, dans les liquides ioniques utilisés, le ou les chlorures d'ammonium sont choisis parmi :
- les composés répondant à la formule générale NR1R2R3⁺Cl⁻, R1, R2, et R3 étant des groupements aliphatiques, linéaires ou ramifiés, de C1 à C20
- les cycloalcanes de C5 à C12 ou aromatiques,
- les chlorures hétérocycles tels la pyridine et les pyridines substituées,
- les dipyridyles,
- les chlorures imidazolium mono, di ou trisustitués,
- les benzymidazoliums et substitués,
- les triazoliums et substitués,
- les piperadiziniums et substitués,
- les pyrrolidiniums et substitués,
- les oxazolidiniums et substitués,
- les morpholiniums et substitués,
- guanidiniums et substitués,
- les thiazoliums et substitués,
- les chlorures de phosphonium et substitués,
- tout autre hétérocycle azoté ou phosphoré contenant éventuellement en outre des atomes d'oxygène ou de soufre, et
- leurs mélanges.

Selon un mode de réalisation avantageux de l'invention, le liquide ionique est un mélange stœchiométrique de chlorure de méthylbutylimidazolium et de chlorure d'aluminium.

Selon un mode de réalisation avantageux de l'invention, l'extraction liquide-liquide est effectuée avec un hydrocarbure choisi parmi :
- des alcanes linéaires ou ramifiés, de 4 à 12 atomes de carbone,
- des cycloalcanes et leurs substitués, de 5 à 12 atomes de carbone,
- des aromatiques substitués par des chaînes alkyle et/ou cycloalkyle, les radicaux alkyles ayant de 1 à 12 atomes de carbone et
- leurs mélanges.

L'extraction liquide-liquide impliquée dans l'invention se fait par addition au mélange de complexes : tétrachlorure de Zr/ composé aromatique et de tétrachlorure d'Hf/ composé aromatique, d'un liquide ionique. Lorsque le susdit mélange de complexe est sous forme de composition solide, l'addition à celui-ci du liquide ionique conduit à l'obtention d'une solution anhydre.

A ce titre, l'invention concerne également une solution anhydre comprenant :
- un liquide ionique, dont le point de fusion est inférieur à 100°C, et
- un mélange de complexes tétrachlorure de Zr/composé aromatique et tétrachlorure d'Hf/ composé aromatique, en solution dans ledit liquide ionique.

Selon un mode de réalisation avantageux de l'invention, dans les complexes définis ci-dessus qui font partie de la solution anhydre, le composé aromatique répond à la formule suivante : 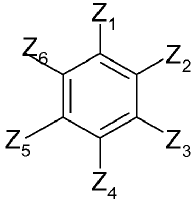 dans laquelle Z₁, Z₂, Z₃, Z₄, Z₅ et Z₆ représentent indépendamment les uns des autres :
- un atome d'hydrogène,
- un alkyl contenant de 1 à 20, notamment de 1 à 12 atomes de carbones, ou
- un aryle.

Selon un autre mode de réalisation avantageux de l'invention, dans la solution anhydre, le liquide ionique, est un mélange notamment stœchiométrique d'un ou plusieurs chlorures d'ammonium et d'un ou plusieurs chlorures métalliques.

Selon un mode de réalisation avantageux de l'invention, dans la solution anhydre le ou les chlorures métalliques du liquide ionique sont choisis parmi le trichlorure d'aluminium, le chlorure de zinc, le tétrachlorure de zirconium, le tétrachlorure d'hafnium, le chlorure ferreux, le chlorure ferrique, le trichlorure de bore, le trichlorure de gallium, le chlorure cuivrique, le chlorure cuivreux, le tétrachlorure de titane, le trichlorure de cadmium, le dichlorure de cobalt, le dichlorure d'étain, le tétrachlorure d'étain, le trichlorure d'antimoine ou leurs mélanges.

Selon un mode de réalisation avantageux de l'invention, dans la solution anhydre le ou les chlorures d'ammonium du liquide ionique sont choisis parmi :
- les composés répondant à la formule générale NR1R2R3⁺Cl⁻, R1, R2, et R3 étant des groupements aliphatiques, linéaires ou ramifiés, de 1 à 20 atomes de carbone
- les cycloalcanes de C5 à C12 ou aromatiques,
- les chlorures hétérocycles tels la pyridine et les pyridines substituées,
- les dipyridyles,
- les chlorures imidazolium mono, di ou trisustitués,
- les benzymidazoliums et substitués,
- les triazoliums et substitués,
- les piperadiziniums et substitués,
- les pyrrolidiniums et substitués,
- les oxazolidiniums et substitués,
- les morpholiniums et substitués,
- guanidiniums et substitués,
- les thiazoliums et substitués,
- les chlorures de phosphonium et substitués,
- tout autre hétérocycle azoté ou phosphorés contenant éventuellement en outre des atomes d'oxygène ou de soufre, et
- leurs mélanges.

Ces composés peuvent être éventuellement porteurs de fonctions diverses, alcools, acides, amines etc.

Selon un mode de réalisation avantageux de l'invention, dans la solution anhydre, le liquide ionique est un mélange stœchiométrique de chlorure de méthylbutylimidazolium et de chlorure d'aluminium.

Lorsque le liquide ionique a été ajouté au mélange de complexes : tétrachlorure de Zr/composé aromatique et tétrachlorure d'Hf/ composé aromatique, et que ce dernier se présente sous forme de composition solide, on ajoute l'hydrocarbure pour faire l'extraction liquide-liquide. Cet hydrocarbure peut également être ajouté simultanément à l'addition du liquide ionique.

Lorsque le mélange de complexes : tétrachlorure de Zr/composé aromatique et tétrachlorure d'Hf/ composé aromatique est en solution dans un solvant, celui-ci peut être soit évaporé, ce qui revient au cas précédent ou la présence de celui-ci peut être maintenue. Dans ce dernier cas, le liquide ionique est ajouté à une solution pouvant déjà contenir un hydrocarbure.

Dans tous ces cas on obtient un mélange réactionnel anhydre.

A ce titre, l'invention concerne un mélange réactionnel anhydre comprenant :
- un liquide ionique, dont le point de fusion est inférieur à 100°C,
- un hydrocarbure ou un mélange d'hydrocarbures, et
- un mélange de complexes : tétrachlorure de Zr/composé aromatique et tétrachlorure d'Hf/ composé aromatique,
le complexe de tétrachlorure de Zr/composé aromatique : Zr(Ar)Cl₂(µ-Cl)₃ZrCl₃, (Ar représentant un aromatique) se trouvant dans l'hydrocarbure ou le mélange d'hydrocarbures, et le complexe tétrachlorure d'Hf/ composé aromatique : [Hf(Ar)Cl₃]⁺[Hf₂Cl₉] se trouvant dans le liquide ionique.

Selon un mode de réalisation avantageux de l'invention, dans les complexes définis ci-dessus qui sont contenus dans la solution anhydre, le composé aromatique répond à la formule suivante : 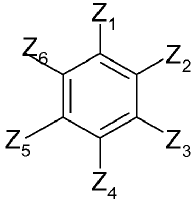 dans laquelle Z₁, Z₂, Z₃, Z₄, Z₅ et Z₆ représentent indépendamment les uns des autres :
- un atome d'hydrogène,
- un alkyl contenant de 1 à 20, notamment de 1 à 12 atomes de carbones, ou
- un aryle.

Selon un autre mode de réalisation avantageux de l'invention, dans la solution anhydre, le liquide ionique est un mélange notamment stœchiométrique d'un ou plusieurs chlorures d'ammonium et d'un ou plusieurs chlorures métalliques

Selon un mode de réalisation avantageux de l'invention, dans la solution anhydre, le ou les chlorures métalliques du liquide ionique sont choisis parmi le trichlorure d'aluminium, le chlorure de zinc, le tétrachlorure de zirconium, le tétrachlorure d'hafnium, le chlorure ferreux, le chlorure ferrique, le trichlorure de bore, le trichlorure de gallium, le chlorure cuivrique, le chlorure cuivreux, le tétrachlorure de titane, le trichlorure de cadmium, le dichlorure de cobalt, le dichlorure d'étain, le tétrachlorure d'étain, le trichlorure d'antimoine ou leurs mélanges.

Selon un mode de réalisation avantageux de l'invention, dans la solution anhydre le ou les chlorures d'ammonium du liquide ionique sont choisis parmi :
- les composés répondant à la formule générale NR1R2R3⁺Cl⁻, R1, R2, et R3 étant des groupements aliphatiques, linéaires ou ramifiés, de 1 à 20 atomes de carbone,
- les cycloalcanes ou aromatiques, de 5 à 12 atomes de carbone,
- les chlorures hétérocycles tels la pyridine et les pyridines substituées, les dipyridyles,
- les chlorures imidazolium mono, di ou trisubstitués,
- les benzymidazoliums et substitués,
- les triazoliums et substitués,
- les piperadiziniums et substitués,
- les pyrrolidiniums et substitués,
- les oxazolidiniums et substitués,
- les morpholiniums et substitués,
- guanidiniums et substitués,
- les thiazoliums et substitués,
- les chlorures de phosphonium et substitués tout autre hétérocycle azoté ou phosphorés contenant éventuellement en outre des atomes d'oxygène ou de soufre, et
- leurs mélanges.

Selon un mode de réalisation avantageux de l'invention, dans la solution anhydre, le liquide ionique est un mélange stœchiométrique de chlorure de méthylbutylimidazolium et de chlorure d'aluminium.

Selon un mode de réalisation avantageux de l'invention, le solvant intervenant dans l'extraction liquide-liquide est un hydrocarbure ou un mélange d'hydrocarbures notamment choisis parmi:
- des alcanes linéaires ou ramifiés, de 1 à 20 atomes de carbone
- des cycloalcanes de 5 à 12 atomes de carbone et leurs substitués,
- des aromatiques substitués par des chaînes alkyle et/ou cycloalkyle, les groupes alkyles ayant de 1 à 20 atomes de carbone
- leurs mélanges.

L'invention a pour objet un procédé de séparation entre du tétrachlorure d'hafnium et du tétrachlorure de zirconium, comportant les étapes suivantes :
- la mise en contact dans des conditions anhydres :
   o -d' un mélange de complexes : tétrachlorure de Zr/composé aromatique et tétrachlorure d'Hf/ composé aromatique avec un liquide ionique, dont le point de fusion est inférieur à 100°C,
   le complexe de tétrachlorure de Zr/composé aromatique étant moléculaire, et le complexe tétrachlorure d'Hf/ composé aromatique étant ionique,
- la récupération du complexe tétrachlorure de Zr/composé aromatique dans un solvant, ledit solvant étant tel que :
   ∘ Soit le susdit mélange de complexes est en solution dans ledit solvant,
   ∘ soit ledit solvant est ajouté au mélange de complexes simultanément à la mise en contact du liquide ionique avec le susdit mélange de complexes, soit il est ajouté au mélange de complexes postérieurement à la mise en contact du liquide ionique avec le susdit mélange de complexes.

Selon un mode de réalisation avantageux du procédé de l'invention, le mélange de complexes : tétrachlorure de Zr/composé aromatique et tétrachlorure d'Hf/ composé aromatique est contenu dans le solvant avant la mise en contact avec le liquide ionique. On peut envisager de ne pas évaporer le solvant après la synthèse des composés organométalliques, puisque c'est ce solvant qui peut être utilisé par la suite dans l'extraction liquide-liquide

Selon un autre mode de réalisation avantageux du procédé de l'invention, le solvant est ajouté au mélange de complexes simultanément avec la mise en contact du liquide ionique avec le mélange de complexes.

Selon un autre mode de réalisation avantageux du procédé de l'invention, le solvant est ajouté au mélange de complexes postérieurement à la mise en contact du liquide ionique avec le mélange de complexes.

Selon un autre mode de réalisation avantageux du procédé de l'invention, celui-ci comporte les étapes suivantes :
- la mise en contact dans des conditions anhydres :
   ∘ -d' un mélange de complexes : tétrachlorure de Zr/composé aromatique et tétrachlorure d'Hf/ composé aromatique avec un liquide ionique,
   le complexe de tétrachlorure de Zr/composé aromatique étant moléculaire, et le complexe tétrachlorure d'Hf/ composé aromatique étant ionique,
   ° si le mélange de complexes ne contient pas de solvant, l'addition d'un solvant à l'issue de l'étape précédente,
   pour obtenir un mélange réactionnel anhydre tel que :
   - si le liquide ionique n'est pas miscible avec le solvant, le sus dit mélange contient une phase comportant le solvant et une phase comportant le liquide ionique,
   - et si le liquide ionique est miscible avec le solvant, le susdit mélange contient un alcane ajouté permettant la formation d'une phase comportant le solvant et d'une phase comportant le liquide ionique,
   et pour effectuer ainsi une extraction liquide-liquide,
   ∘ la récupération du complexe ionique : tétrachlorure d'Hf/ composé aromatique solubilisé dans le liquide ionique, et celle du complexe moléculaire : tétrachlorure de Zr/composé aromatique dans le solvant.

Selon un autre mode de réalisation avantageux du procédé de l'invention, la récupération du complexe moléculaire : tétrachlorure de Zr/composé aromatique dans le solvant se fait par décantation entre la phase comportant le solvant et la phase comportant le liquide ionique, lorsque ces deux phases ne sont pas miscibles entre elles.

Selon un autre mode de réalisation avantageux du procédé de l'invention, la récupération du complexe moléculaire tétrachlorure de Zr/composé aromatique dans le solvant se fait par ajout d'un alcane, notamment butane, pentane, permettant l'obtention de la phase comportant le solvant et de la phase comportant le liquide ionique.

L'extraction liquide-liquide selon l'invention peut se faire de façon discontinue ; ainsi on met en contact une portion de mélange de complexes : tétrachlorure de Zr/composé aromatique et tétrachlorure d'Hf/ composé aromatique avec un certain volume de liquide ionique et d'hydrocarbures. Après agitation on s'assure qu'il y bien formation de deux phases, condition essentielle à l'extraction. Si non il faut modifier la composition d'au moins un des liquides. C'est ainsi que les hydrocarbures aromatiques sont souvent miscibles avec les liquides ioniques ce qui oblige à avoir recours à l'adjonction d'alcane.

Selon un autre mode de réalisation avantageux du procédé de l'invention, l'étape de mise en contact du mélange de complexes : tétrachlorure de Zr/composé aromatique et tétrachlorure d'Hf/ composé aromatique avec le liquide ionique est précédée d'une étape de traitement du tétrachlorure d'hafnium et du tétrachlorure de zirconium par un composé aromatique afin d'obtenir le mélange de complexes : tétrachlorure de Zr/composé aromatique et tétrachlorure d'Hf/ composé aromatique.

Selon un autre mode de réalisation avantageux du procédé de l'invention, celui-ci comporte une étape d'élimination du composé aromatique desdits complexes.

L'étape d'élimination du composé aromatique peut se faire par distillation sous vide.

L'étape d'élimination du composé aromatique peut se faire par distillation sous vide en présence d'un alcane.

Selon un autre mode de réalisation avantageux du procédé de l'invention, ledit aromatique a la formule suivante : 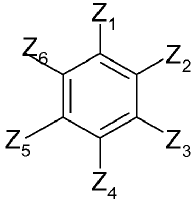 dans laquelle Z₁, Z₂, Z₃, Z₄, Z₅ et Z₆ représentent indépendamment les uns des autres :
- un atome d'hydrogène, ou
- un alkyl contenant de 1 à 12 atomes de carbones, ou
- un aryle.

Selon un autre mode de réalisation avantageux du procédé de l'invention, ledit liquide ionique est un mélange notamment stœchiométrique d'un ou plusieurs chlorures d'ammonium et d'un ou plusieurs chlorures métalliques.

Selon un autre mode de réalisation avantageux du procédé de l'invention, le ou les chlorures métalliques du liquide ionique sont choisis parmi le trichlorure d'aluminium, le chlorure de zinc, le tétrachlorure de zirconium, le tétrachlorure d'hafnium, le chlorure ferreux, le chlorure ferrique, le trichlorure de bore, le trichlorure de gallium, le chlorure cuivrique, le chlorure cuivreux, le tétrachlorure de titane, le trichlorure de cadmium, le dichlorure de cobalt, le dichlorure d'étain, le tétrachlorure d'étain, le trichlorure d'antimoine ou leurs mélanges.

Selon un autre mode de réalisation avantageux du procédé de l'invention, le ou les chlorures d'ammoniums du liquide ionique sont choisis parmi :
- les composés répondant à la formule générale NR1R2R3+Cl-, R1, R2, et R3 étant des groupements aliphatiques, linéaires ou ramifiés, ayant de 1 à 20 atomes de carbone
- les cycloalalcanes de 5 à 12 atomes de carbone ou aromatiques,
- les chlorures hétérocycles tels la pyridine et les pyridines substituées,
- les dipyridyles,
- les chlorures imidazolium mono, di ou trisubstitués,
- les benzymidazoliums et substitués,
- Les triazoliums et substitués,
- les piperadiziniums et substitués,
- les pyrrolidiniums et substitués,
- les oxazolidiniums et substitués,
- les morpholiniums et substitués,
- guanidiniums et substitués,
- les thiazoliums et substitués,
- les chlorures de phosphonium et substitués,
- tout autre hétérocycle azoté ou phosphorés contenant éventuellement en outre des atomes d'oxygène ou de soufre, et
- leurs mélanges.

Selon un autre mode de réalisation avantageux du procédé de l'invention, le liquide ionique est un mélange stœchiométrique de chlorure de méthylbutylimidazolium et de chlorure d'aluminium.

Selon un autre mode de réalisation avantageux du procédé de l'invention, le solvant est un hydrocarbure ou un mélange d'hydrocarbures notamment choisis parmi:
- des alcanes linéaires ou ramifiés de 1 à 20 atomes de carbone,
- des cycloalcanes de C5 à C12 et leurs substitués,
- des aromatiques substitués par des chaînes alkyle et/ou cycloalkyle, les groupes alkyles ayant de 1 à 20 atomes de carbone et
- leurs mélanges.

Selon un autre mode de réalisation avantageux du procédé de l'invention, l'extraction liquide-liquide se fait de façon discontinue.
On peut également envisager plusieurs lavage du liquide ionique par les hydrocarbures en mode discontinue, afin d'augmenter le rendement d'extraction liquide-liquide.

Ladite extraction liquide-liquide peut se faire de façon continue à contre-courant. Si la performance souhaitée pour l'extraction n'est pas suffisante on peut ajouter le nombre d'étages nécessaire à l'obtention du degré de séparation voulue.

L'invention a en particulier pour objet un procédé tel que décrit ci-dessus comportant les étapes suivantes :
- traitement d'un mélange de tétrachlorure d'hafnium et de tétrachlorure de zirconium par de l'hexamethylbenzène en solution dans le toluène pendant 48h à température ambiante avec agitation pour obtenir un mélange de complexes : tétrachlorure de Zr/composé aromatique et tétrachlorure d'Hf/ composé aromatique en solution dans le toluène,
- refroidissement de la solution obtenue à l'étape précédente à 4°C,
- récupération du solide formé à l'étape précédente,
- évaporation du toluène afin d'obtenir un mélange de complexes,
- dissolution du mélange de complexes dans un mélange stœchiométrique de chlorure de méthylbutylimidazolium et de chlorure d' aluminium , et ajout de toluène pour obtenir un mélange réactionnel,
- ajout de pentane au mélange réactionnel pour former deux phases,
- séparation des deux phases par décantation et récupération du complexe ionique tétrachlorure d'Hf/ composé aromatique et du complexe moléculaire:tétrachlorure de Zr/composé aromatique.

Une fois que la séparation entre les complexes : tétrachlorure de Zr/composé aromatique et tétrachlorure d'Hf/ composé aromatique a été faite, il est nécessaire de désengager les tétrachlorures de zirconium et d'hafnium par élimination du composé aromatique. Pour cela on chauffe sous vide les composés jusqu'à distillation dudit arène ce qu'on peut faciliter aussi par entrainement par un alcane, par exemple du dodécane dans le cas de l'hexaméthylbenzène ou d'heptane dans le cas des xylènes.
On appréciera que l'invention illustrée par les exemples utilise un mélange préparé à partir d'une part de ZrCl₄ et d'autre part de HfCl₄, ce qui est équivalent à l'utilisation d'un mélange préexistant, tels que ceux que l'on obtient à partir du traitement de minerai de zircon.

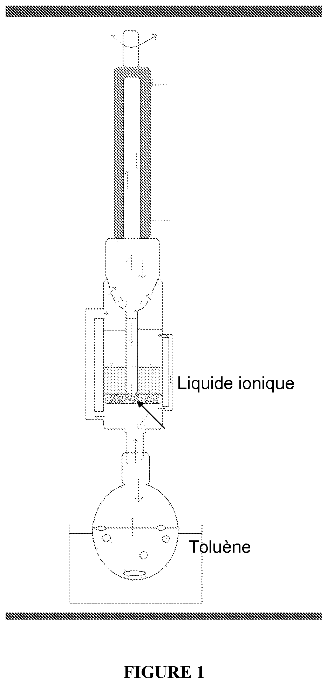

La figure 1 représente un montage destiné à l'extraction du liquide ionique contenant le mélange de complexes tétrachlorure de Zr / composé aromatique - tétrachlorure d'Hf/ composé aromatique par le toluène.

### Exemples

### Exemple 1 : Préparation in situ du mélange de complexes: tétrachlorure de Zr / hexaméthylbenzène - tétrachlorure d'Hf/ hexaméthylbenzène

On dissout 0,818 g (4,04 mmol) d'hexaméthylbenzène dans 100 mL de toluène. A cette solution on ajoute 1,38 g (5,92 mmol) de tétrachlorure de zirconium et 1,78 g (5,56 mmol) de tétrachlorure d'hafnium. Après 48h d'agitation, on refroidit la solution à 4°C. On récupère le solide formé et on évapore le toluène.

### Exemple 2 : Préparation d'un complexe : tétrachlorure d'hafnium/ tétraméthylbenzène

0.33g (2.46 mmol) de tétraméthylbenzène est dissout dans 50mL de toluène. 1.76g (5.50 mmol) de tétrachlorure d'hafnium est ajouté à l'aide d'un tube de Bush.

La solution prend très rapidement une coloration jaune canari. La solution est placée sous forte agitation et à température ambiante durant 48h.

Après 48h, un solide jaune est déposé sur les parois du tube de Schlenk et le toluène est légèrement jaune. Le mélange est placé à 4°C durant 24h. Le solvant est canulé, puis le solide séché durant 48h sous 10⁻² mmHg.

### Exemple 3 : Préparation d'un complexe : tétrachlorure de zirconium/ tétraméthylbenzène

0.71g (5.29 mmol) de tétraméthylbenzène est dissout dans 80 mL de toluène. 2.49g (10.69 mmol) de tétrachlorure de zirconium est ajouté à l'aide d'un tube de bush.

La solution, qui se colore peu à peu en jaune, est laissée sous agitation et à température ambiante durant 48h.

Après 48h, une solution jaune citron est obtenue, ainsi qu'un solide blanc, extrêmement fin. La solution est refroidit à 4°C durant 24h. Le solvant est canulé, puis le solide séché durant 48h sous 10⁻² mmHg.

### Exemple 4 : Préparation in situ d'un mélange de complexes : 0.7 mole tétrachlorure de Zr/ - 0.3 mole de tétrachlorure de Hf/ 1 mole de tétraméthylbenzène

5.010g (37,25 mmol) de tétraméthylbenzène est dissout dans 50 mL de toluène. 6,080g (26.08 mmol) de tétrachlorure de zirconium et 3.580g (11.18 mmol) de tétrachlorure d'hafnium sont ajoutés à l'aide d'un tube de Bush. La solution, qui prend rapidement une couleur jaune laiteuse, est laissé sous forte agitation et à température ambiante durant 48h.

Après 48h d'agitation, la solution, jaune, est filtrée à l'aide d'un tube muni d'un frité (pores: taille 3). La solution de toluène, jaune et trouble, et le solide, blanc jaunâtre, sont conservés puis analysés par ICP et Fluorescence X.

### Exemple 5 : Préparation in situ d'un mélange de complexes : 0.9 mole tétrachlorure de Zr/ 0.1 mole de tétrachlorure de Hf/ 1 mole de tétraméthylbenzène

5.008 (37,25 mmol) de tétraméthylbenzène est dissout dans 50 mL de toluène. 7.810g (33.53 mmol) de tétrachlorure de zirconium et 1.190g (3.725 mmol) de tétrachlorure d'hafnium sont ajoutés à l'aide d'un tube de bush.

La solution, qui prend rapidement une couleur jaune laiteuse, est laissé sous forte agitation et à température ambiante durant 48h.
Après 48h d'agitation, la solution, jaune soutenu, est filtrée à l'aide d'un tube muni d'un frité (pores : taille 3).

La solution de toluène, jaune et trouble, et le solide, blanc jaunâtre, sont conservés puis analysés par ICP et Fluorescence X.

### Exemple 6 : Préparation du liquide ionique [1-butyl-3-méthylimidazolium]AlCl₄

On chauffe dans un ballon 16,61g (95,1 mmol) de chlorure de méthylbutylimidazolium à 65°C On y ajoute 12,68 g (95,1 mmol) de chlorure d'aluminium et on agite pendant une nuit. On obtient un liquide incolore, visqueux.

### Exemple 7 : Préparation du liquide ionique [1-butyl-3-méthylimidazolium]AlCl₄

Dans un tube de Schlenk à fond rond, 20,00g (113,3 mmol) de chlorure de 1-butyl-3-méthylimidazolium est chauffé à 70°C, à cette température, le sel est liquide. A l'aide d'un tube de Bush 15.28g (114,7 mmol) de trichlorure d'aluminium sont ajoutés sous balayage d'argon dans le sel liquide sous forte agitation La solution, transparente et limpide, est laissée à 70°C et sous agitation durant 24h.Un liquide visqueux, limpide et légèrement jaune est obtenu.

### Exemple 8 : Préparation du liquide ionique [1-butyl-3-méthylimidazolium] ZnCl₃

Dans un tube de Schlenk à fond rond, 2.00g de 1-butyl-3-methylimidazolium (11.46 mmol) sont chauffés à 70°C sous flux d'argon. A ce mélange sont ajoutés 1,56g de dichlorure de Zinc (11.45mmol) anhydre très lentement et sous constante agitation, en environ 1h. Le chauffage a été poursuivi pendant 1h, avant d'obtenir des liquides blanchâtres et très visqueux.
RMN ¹H (CD₃CN, δ): 8.63 (s, H₂), 7.37 (d, H_{4,5}), 4.15 (t, H₇), 3.84 (s, H₆), 1.80 (m, H₈), 1.29 (m, H₉), 0.91 (t, H₁₀). RMN ¹³C (CD₃CN, δ): 136.1 (C₂), 123.6 (C₅), 122.2 (C₄), 49.3 (C₇), 36.0 (C₆), 31.6 (C₈), 19.0 (C₉), 12.7 (C₁₀). MS (m/z du pic le plus haut). ESI⁺: 139.1 ([BMIm]⁺, 24%), 312.9 ([2BMIm,Cl]⁺, 9%), 448.5 ([2 BMIm, ZnCl₃]⁺, 2%), 622.8 ([3 BMIm, ZnCl₄]⁺, 100%), 758.5 ([3 BMIm,2 ZnCl₃]⁺, 26). ESI⁻ : 170.9 ([ZnCl₃]⁻, 100%), 482.6 ([BMIm, 2 ZnCl₃]⁻, 24%).

### Exemple 9 : Préparation du liquide ionique [1-butyl-3-méthylimidazolium] ₂ZrCl₆

Dans un tube de Schlenk à fond rond, 0.5g (2.86 mmol) de chlorure de 1-butyl-1-méthylimidazolium est chauffé à 70°C, à cette température, le sel est liquide. A l'aide d'un tube de Bush 0.667 g (2.86 mmol) de tétrachlorure de zirconium sont ajoutés sous balayage d'argon dans le sel liquide sous forte agitation. La solution, transparente et limpide, est laissée à 70°C et sous agitation durant 24h.Un liquide visqueux est obtenu.
¹H NMR (CD₃CN, δ) : 8.49 (1H, s, C₂*H*), 7.38 and 7.34 (2H, d, C_{4,5}*H*), 4.20 (2H, t, C₇*H₂*), 3.83 (3H, s, C₆*H₃*), 1.80 (2H, qn, C₈*H₂*), 1.31 (2H, sx, C₉*H₂*), 0.95 (3H, t, C₁₀*H₃*).¹³C NMR (CD₃CN, δ) : 136.83 (s, C₂), 124.59 and 123.21 (d, C_{4,5}), 50.30 (s, C₇), 36.98 (s, C₆), 32.56 (s, C₈), 19.91 (s, C₉), 13.65 (s, C₁₀).¹³C Solid-state NMR (δ) : 135.82 (C₂), 124.46 and 123.15 (C_{4,5}), 49.68 (C₇), 39.11 and 37.52 (C₆), 32.50 (C₈), 20.08 and 19.02 (C₉), 13.47 and 10.83 (C₁₀). ESI⁺: 139.1 [C₁C₄Im⁺], 312.8 [2(C₁C₄Im⁺) Cl⁻], 544.5 [2(C₁C₄Im⁺)ZrCl₅⁻], 721.0 [3(C₁C₄Im⁺) ZrCl₆²⁻], 1302.8 [5(C₁C₄Im⁺) 2ZrCl₆²⁻] ESI⁻: 266.9 [ZrCl₅⁻]

### Exemple 10 : Préparation du liquide ionique [1-butyl-3-méthylimidazolium] ₂HfCl₆

Dans un tube de Schlenk à fond rond, 0.5g (2.86 mmol) de chlorure de 1-butyl-1-méthylimidazolium est chauffé à 70°C, à cette température, le sel est liquide. A l'aide d'un tube de Bush (0.916g, 2.86 mmol) de tétrachlorure d'hafnium sont ajoutés sous balayage d'argon dans le sel liquide sous forte agitation. La solution, transparente et limpide, est laissée à 70°C et sous agitation durant 24h.Un liquide visqueux est obtenu.
¹H NMR (CD₃CN, δ) : 8.52 (1H, s, C₂*H*), 7.36 and 7.31 (2H, d, C_{4,5}*H*), 4.14 (2H, t, C₇*H₂*), 3.81 (3H, s, C₆*H₃*), 1.80 (2H, qn, C₈*H₂*), 1.29 (2H, sx, C₉*H₂*), 0.90 (3H, t, C₁₀*H₃*). ¹³C NMR (CD₃CN, δ) : 136.97 (s, C₂), 124.46 and 123.06 (d, C_{4,5}), 50.14 (s, C₇), 36.92 (s, C₆), 32.53 (s, C₈), 19.80 (s, C₉), 13.57 (s, C₁₀). ¹³C Solid-state NMR (δ) : 135.59 (C₂), 123.22 (C_{4,5}), 49.73 (C₇), 39.34 (C₆), 32.41 (C₈), 20.04 (C₉), 13.36 and 10.88 (C₁₀). ESI⁺: 139.1 [C₁C₄Im⁺], 313.0 [2(C₁C₄Im⁺) Cl⁻], 693.8[2(C₁C₄Im⁺) HfCl₅⁻], 809.0 [3(C₁C₄Im⁺) HfCl₆²⁻], 1447.8 [5(C₁C₄Im⁺) 2HfCl₆²⁻] ESI⁻: 356.9 [HfCl₅⁻]

### Exemple 11 : Solubilité de composés aromatiques et/ou d'alcanes dans différents solvants

Les solubilités relatives d'alcanes, de composés aromatiques, et de couples composé aromatique/alcane ont été étudiés dans les solvants suivants : toluène, CₙH₂ₙ₊₂ et liquide ionique [1-butyl-3-méthylimidazolium]AlCl₄. Les résultats sont consignés dans le tableau 1.

**Tableau 1 : Solubilité de composés aromatiques et/ou d'alcanes dans différents solvants**

| | **Toluène** | **Chaine alkyl : CₙH₂ₙ₊₂** | **Liquide Ionique : C₁C₄ImAlCl₄** |
|---|---|---|---|
| **CₙH₂ₙ₊₂ avec n>6** | Totalement soluble | | Solubilité < 4% |
| **Ar(CH₃)ₙ** | Totalement soluble | Totalement soluble | n= 1 solubilité 38% |
| | | | n>4 : insoluble |
| **Ar(CH₃)ₙ + CₙH₂ₙ₊₂** | Totalement soluble | Totalement soluble | n= 1 solubilité 8% |
| | | | n>4 solubilité 15% |

### Exemple 12: Extraction des complexes tétrachlorure de zirconium / hexaméthylbenzène et tétrachlorure d'hafnium/ hexaméthylbenzène

Les solubilités sont mesurées par fluorescence X. Intensité: Hf (Lα) 0.5476 and Zr (Kα) 0.3731.

On ajoute le mélange obtenu selon l'exemple 1 au liquide ionique obtenu selon l'exemple 6, et on agite pendant une nuit. On ajoute alors du toluène et on agite pendant un jour. On n'observe alors qu'une seule phase. On introduit alors du pentane pour extraire le toluène du liquide ionique (tableau 2).

**Tableau 2: Quantités de complexes et de solvants mis en œuvre pour l'extraction.**

| | Complexe du Zr | Complexe de l' Hf |
|---|---|---|
| **Quantité de complexe (mg - µmol)** | 50 - *8.5* | 47 - *4.,9* |
| **Liquide ionique (mL)** | 2 | 1 |
| **Toluène (mL)** | 3 | 1,5 |
| **Pentane (mL)** | 2 | 1 |

L'extraction des complexes par le mélange toluène/pentane à partir du liquide montre qu'environ 13±5% du complexe du zirconium est extrait tandis qu'on ne retrouve qu'une trace du complexe de l'hafnium dans la phase organique (tableau 3).

**Tableau 3: Séparation du Zr et de l'Hf**

| | **Zr** | **Hf** |
|---|---|---|
| **Liquide ionique** | 87± 5% | Approx. 100% |
| **Phase organique** | 13±5% | **trace** Approx. 0% |

Ceci montre que l' Hafnium peut être quantitativement extrait par un seul équilibre et que la phase organique ne contient pratiquement que du zirconium.

Les liquides ioniques obtenus dans les exemples 8 à 10 sont utilisés de façon analogue pour obtenir une séparation des complexes: tétrachlorure de Zr /composé aromatique - tétrachlorure d'Hf/ composé aromatique obtenus dans les exemples 1 à 5 avec un enrichissement obtenu conforme à ce qui est attendu.

## Revendications

1. Utilisation d'un liquide ionique, dont le point de fusion est inférieur à 100°C, et à anion non nucléophile, dans des conditions anhydres, pour la mise en œuvre d'un procédé de séparation entre du tétrachlorure d'hafnium et du tétrachlorure de zirconium, à partir d'un mélange de complexes: tétrachlorure de Zr/composé aromatique et tétrachlorure d'Hf/ composé aromatique, par extraction liquide -liquide, avec un enrichissement Zr/Hf d'au moins 100/1 (exprimé en masse).

2. Utilisation d'un liquide ionique selon la revendication 1, dans laquelle l'extraction liquide- liquide est effectuée avec un hydrocarbure ou un mélange d'hydrocarbures

3. Utilisation d'un liquide ionique selon l'une des revendications 1 ou 2, dans laquelle la température est inférieure à environ 100°C, et est notamment d'environ 15 à environ 35°C

4. Utilisation d'un liquide ionique selon l' une des revendications 1 à 3, dans laquelle ledit composé aromatique a la formule suivante : 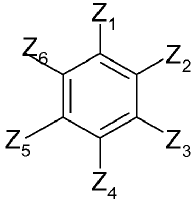 dans laquelle Z₁, Z₂, Z₃, Z₄, Z₅ et Z₆ représentent indépendamment les uns des autres :
- un atome d'hydrogène,
- un alkyl linéaire ou ramifié contenant de 1 à 20 notamment de 1 à 12 atomes de carbones, ou
- un aryle.

5. Utilisation d'un liquide ionique selon l'une quelconque des revendications 1 à 4, dans laquelle ledit liquide ionique est un mélange notamment stœchiométrique d'un ou plusieurs chlorures d'ammonium et d'un ou plusieurs chlorures métalliques.

6. Utilisation d'un liquide ionique selon la revendication 5, dans laquelle le ou les chlorures métalliques sont choisis parmi le trichlorure d'aluminium, le chlorure de zinc, le tétrachlorure de zirconium, le tétrachlorure d'hafnium, le chlorure ferreux, le chlorure ferrique, le trichlorure de bore, le trichlorure de gallium, le chlorure cuivrique, le chlorure cuivreux, le tétrachlorure de titane, le trichlorure de cadmium, le dichlorure de cobalt, le dichlorure d'étain, le tétrachlorure d'étain, le trichlorure d'antimoine ou leurs mélanges.

7. Utilisation du liquide ionique selon l'une des revendications 5 ou 6, dans laquelle le ou les chlorures d'ammonium sont choisis parmi :
- les composés répondant à la formule générale NR1R2R3⁺Cl⁻, R1, R2, et R3 étant des groupements aliphatiques, linéaires ou ramifiés, de C1 à C20
- les cycloalcanes de C5 à C12 ou aromatiques,
- les chlorures hétérocycles tels la pyridine et les pyridines substituées,
- les dipyridyles,
- les chlorures imidazolium mono, di ou trisustitués,
- les benzymidazoliums et substitués,
- les triazoliums et substitués,
- les piperadiziniums et substitués,
- les pyrrolidiniums et substitués,
- les oxazolidiniums et substitués,
- les morpholiniums et substitués,
- guanidiniums et substitués,
- les thiazoliums et substitués,
- les chlorures de phosphonium et substitués
- tout autre hétérocycle azoté ou phosphoré contenant éventuellement en outre des atomes d'oxygène ou de soufre, et
- leurs mélanges.

8. Utilisation d'un liquide ionique selon l'une des quelconques revendications 1 à 7, dans laquelle le liquide ionique est un mélange stœchiométrique de chlorure de méthylbutylimidazolium et de chlorure d'aluminium.

9. Utilisation d'un liquide ionique selon la revendication 8, dans laquelle l'hydrocarbure est choisi parmi:
- des alcanes linéaires ou ramifiés, de 4 à 12 atomes de carbone,
- des cycloalcanes et leurs substitués, de 5 à 12 atomes de carbone,
- des aromatiques substitués par des chaînes alkyle et/ou cycloalkyle, les radicaux alkyles ayant de 1 à 12 atomes de carbone et
- leurs mélanges.

10. Solution anhydre comprenant :
- un liquide ionique, dont le point de fusion est inférieur à 100°C, et
- un mélange de complexes tétrachlorure de Zr/composé aromatique et tétrachlorure d'Hf/ composé aromatique, en solution dans ledit liquide ionique,
ledit aromatique ayant notamment la formule suivante : 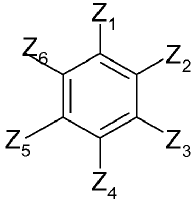 dans laquelle Z₁, Z₂, Z₃, Z₄, Z₅ et Z₆ représentent indépendamment les uns des autres :
- un atome d'hydrogène,
- un alkyl contenant de 1 à 20, notamment de 1 à 12 atomes de carbones, ou
- un aryle,
ledit liquide ionique étant en particulier un mélange notamment stœchiométrique d'un ou plusieurs chlorures d'ammonium et d'un ou plusieurs chlorures métalliques,
le ou les chlorures métalliques étant notamment choisis parmi le trichlorure d'aluminium, le chlorure de zinc, le tétrachlorure de zirconium, le tétrachlorure d'hafnium, le chlorure ferreux, le chlorure ferrique, le trichlorure de bore, le trichlorure de gallium, le chlorure cuivrique, le chlorure cuivreux, le tétrachlorure de titane, le trichlorure de cadmium, le dichlorure de cobalt, le dichlorure d'étain, le tétrachlorure d'étain, le trichlorure d'antimoine ou leurs mélanges et
le ou les chlorures d'ammonium étant notamment choisis parmi :
- les composés répondant à la formule générale NR1R2R3⁺Cl⁻, R1, R2, et R3 étant des groupements aliphatiques, linéaires ou ramifiés, de 1 à 20 atomes de carbone
- les cycloalcanes de C5 à C12 ou aromatiques,
- les chlorures hétérocycles tels la pyridine et les pyridines substituées,
- les dipyridyles,
- les chlorures imidazolium mono, di ou trisustitués,
- les benzymidazoliums et substitués,
- les triazoliums et substitués,
- les piperadiziniums et substitués,
- les pyrrolidiniums et substitués,
- les oxazolidiniums et substitués,
- les morpholiniums et substitués,
- guanidiniums et substitués,
- les thiazoliums et substitués,
- les chlorures de phosphonium et substitués,
- tout autre hétérocycle azoté ou phosphorés contenant éventuellement en outre des atomes d'oxygène ou de soufre, et
- leurs mélanges.

11. Mélange réactionnel anhydre comprenant :
- un liquide ionique, dont le point de fusion est inférieur à 100°C,
- un hydrocarbure ou un mélange d'hydrocarbures, et
- un mélange de complexes: tétrachlorure de Zr/composé aromatique et tétrachlorure d'Hf/ composé aromatique,
le complexe de tétrachlorure de Zr/composé aromatique : Zr(Ar)Cl₂(µ-Cl)₃ZrCl₃, (Ar représentant un aromatique) se trouvant dans l'hydrocarbure ou le mélange d'hydrocarbures, et le complexe tétrachlorure d'Hf/ composé aromatique : [Hf(Ar)Cl₃]⁺[Hf₂Cl₉] se trouvant dans le liquide ionique.
ledit aromatique ayant notamment la formule suivante : 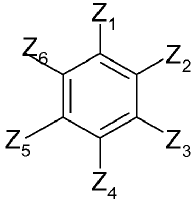 dans laquelle Z₁, Z₂, Z₃, Z₄, Z₅ et Z₆ représentent indépendamment les uns des autres :
- un atome d'hydrogène,
- un alkyl contenant de 1 à 20, notamment de 1 à 12 atomes de carbones, ou
- un aryle,
ledit liquide ionique étant en particulier un mélange notamment stœchiométrique d'un ou plusieurs chlorures d'ammonium et d'un ou plusieurs chlorures métalliques,
le ou les chlorures métalliques étant notamment choisis parmi le trichlorure d'aluminium, le chlorure de zinc, le tétrachlorure de zirconium, le tétrachlorure d'hafnium, le chlorure ferreux, le chlorure ferrique, le trichlorure de bore, le trichlorure de gallium, le chlorure cuivrique, le chlorure cuivreux, le tétrachlorure de titane, le trichlorure de cadmium, le dichlorure de cobalt, le dichlorure d'étain, le tétrachlorure d'étain, le trichlorure d'antimoine ou leurs mélanges,
le ou les chlorures d'ammoniums étant notamment choisis parmi :
- les composés répondant à la formule générale NR1R2R3⁺Cl⁻, R1, R2, et R3 étant des groupements aliphatiques, linéaires ou ramifiés, de 1 à 20 atomes de carbone,
- les cycloalcanes ou aromatiques, de 5 à 12 atomes de carbone,
- les chlorures hétérocycles tels la pyridine et les pyridines substituées, les dipyridyles,
- les chlorures imidazolium mono, di ou trisubstitués,
- les benzymidazoliums et substitués,
- les triazoliums et substitués,
- les piperadiziniums et substitués,
- les pyrrolidiniums et substitués,
- les oxazolidiniums et substitués,
- les morpholiniums et substitués,
- guanidiniums et substitués,
- les thiazoliums et substitués,
- les chlorures de phosphonium et substitués tout autre hétérocycle azoté ou phosphorés contenant éventuellement en outre des atomes d'oxygène ou de soufre, et
- leurs mélanges.
le dit solvant étant notamment un hydrocarbure ou un mélange d'hydrocarbures en particulier choisis parmi:
- des alcanes linéaires ou ramifiés, de 1 à 20 atomes de carbone
- des cycloalcanes de 5 à 12 atomes de carbone et leurs substitués,
- des aromatiques substitués par des chaînes alkyle et/ou cycloalkyle, les groupes alkyles ayant de 1 à 20 atomes de carbone
- leurs mélanges.

12. Procédé de séparation entre du tétrachlorure d'hafnium et du tétrachlorure de zirconium, comportant les étapes suivantes:
- la mise en contact dans des conditions anhydres:
∘ -d' un mélange de complexes: tétrachlorure de Zr/composé aromatique et tétrachlorure d'Hf/ composé aromatique avec un liquide ionique, dont le point de fusion est inférieur à 100°C,
le complexe de tétrachlorure de Zr/composé aromatique étant moléculaire, et le complexe tétrachlorure d'Hf/ composé aromatique étant ionique
- la récupération du complexe tétrachlorure de Zr/composé aromatique dans un solvant, ledit solvant étant tel que :
∘ soit il contient le susdit mélange de complexes,
∘ soit il est ajouté au mélange de complexes simultanément à la mise en contact du liquide ionique avec le susdit mélange de complexes, soit il est ajouté au mélange de complexes postérieurement à la mise en contact du liquide ionique avec le susdit mélange de complexes.

13. Procédé selon la revendication 12, dans lequel le mélange de complexe : tétrachlorure de Zr/composé aromatique et tétrachlorure d'Hf/ composé aromatique est contenu dans le solvant.

14. Procédé selon la revendication 12, dans lequel le solvant est ajouté au mélange de complexes simultanément avec la mise en contact du liquide ionique avec le mélange de complexes.

15. Procédé selon la revendication 12, dans lequel le solvant est ajouté au mélange de complexes postérieurement à la mise en contact du liquide ionique avec le mélange de complexes

16. Procédé de séparation selon la revendication 12, entre du tétrachlorure d'hafnium et du tétrachlorure de zirconium, comportant les étapes suivantes:
- la mise en contact dans des conditions anhydres:
∘ -d' un mélange de complexes : tétrachlorure de Zr/composé aromatique et tétrachlorure d'Hf/ composé aromatique avec un liquide ionique,
le complexe de tétrachlorure de Zr/composé aromatique étant moléculaire, et le complexe tétrachlorure d'Hf/ composé aromatique étant ionique,
∘ si le mélange de complexes ne contient pas de solvant, l'addition d'un solvant à l'issue de l'étape précédente,
pour obtenir un mélange réactionnel anhydre tel que :
- si le liquide ionique n'est pas miscible avec le solvant, le sus dit mélange contient une phase comportant le solvant et une phase comportant le liquide ionique,
- et si le liquide ionique est miscible avec le solvant, le susdit mélange contient un alcane ajouté permettant la formation d'une phase comportant le solvant et d'une phase comportant le liquide ionique,
Et pour effectuer ainsi une extraction liquide-liquide,
∘ la récupération du complexe ionique : tétrachlorure d'Hf/ composé aromatique solubilisé dans le liquide ionique, et celle du complexe moléculaire : tétrachlorure de Zr/composé aromatique dans le solvant.

17. Procédé selon une quelconque des revendications 12 à 16, dans lequel la récupération du complexe moléculaire : tétrachlorure de Zr/composé aromatique dans le solvant se fait par décantation entre la phase comportant le solvant et la phase comportant le liquide ionique, lorsque ces deux phases ne sont pas miscibles entre elles.

18. Procédé selon une des quelconques revendications 12 à 16, dans lequel la récupération du complexe moléculaire tétrachlorure de Zr/composé aromatique dans le solvant se fait par ajout d'un alcane, notamment butane, pentane, permettant l'obtention de la phase comportant le solvant et de la phase comportant le liquide ionique.

19. Procédé selon une quelconque des revendications 12 à 18, dans lequel l'étape de mise en contact du mélange de complexes : tétrachlorure de Zr/composé aromatique et tétrachlorure d'Hf/ composé aromatique avec le liquide ionique est précédée d'une étape de traitement du tétrachlorure d'hafnium et du tétrachlorure de zirconium par un composé aromatique afin d'obtenir le mélange de complexes : tétrachlorure de Zr/composé aromatique et tétrachlorure d'Hf/ composé aromatique.

20. Procédé selon une quelconque des revendications 12 à 19, comportant une étape d'élimination du composé aromatique desdits complexes, notamment par distillation sous vide et en particulier par distillation sous vide en présence d'un alcane.

21. Procédé selon l'une des quelconques revendications 12 à 20, dans lequel ledit aromatique a la formule suivante : 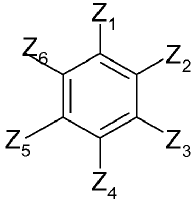 dans laquelle Z₁, Z₂, Z₃, Z₄, Z₅ et Z₆ représentent indépendamment les uns des autres :
- un atome d'hydrogène, ou
- un alkyl contenant de 1 à 12 atomes de carbones, ou
- un aryle,
dans lequel ledit liquide ionique est un mélange notamment stœchiométrique d'un ou plusieurs chlorures d'ammonium et d'un ou plusieurs chlorures métalliques,
le ou les chlorures métalliques étant notamment choisis parmi le trichlorure d'aluminium, le chlorure de zinc, le tétrachlorure de zirconium, le tétrachlorure d'hafnium, le chlorure ferreux, le chlorure ferrique, le trichlorure de bore, le trichlorure de gallium, le chlorure cuivrique, le chlorure cuivreux, le tétrachlorure de titane, le trichlorure de cadmium, le dichlorure de cobalt, le dichlorure d'étain, le tétrachlorure d'étain, le trichlorure d'antimoine ou leurs mélanges,
le ou les plusieurs chlorures d'ammoniums étant notamment choisis parmi :
- les composés répondant à la formule générale NR1R2R3+Cl-, R1, R2, et R3 étant des groupements aliphatiques, linéaires ou ramifiés, ayant de 1 à 20 atomes de carbone
- les cycloalalcanes de 5 à 12 atomes de carbone ou aromatiques,
- les chlorures hétérocycles tels la pyridine et les pyridines substituées,
- les dipyridyles,
- les chlorures imidazolium mono, di ou trisubstitués,
- les benzymidazoliums et substitués,
- Les triazoliums et substitués,
- les piperadiziniums et substitués,
- les pyrrolidiniums et substitués,
- les oxazolidiniums et substitués,
- les morpholiniums et substitués,
- guanidiniums et substitués,
- les thiazoliums et substitués,
- les chlorures de phosphonium et substitués,
- tout autre hétérocycle azoté ou phosphorés contenant éventuellement en outre des atomes d'oxygène ou de soufre, et
- leurs mélanges,
ledit solvant étant notamment un hydrocarbure ou un mélange d'hydrocarbures notamment choisis parmi:
- des alcanes linéaires ou ramifiés de 1 à 20 atomes de carbone,
- des cycloalcanes de C5 à C12 et leurs substitués,
- des aromatiques substitués par des chaînes alkyle et/ou cycloalkyle, les groupes alkyles ayant de 1 à 20 atomes de carbone et
- leurs mélanges.

22. Procédé selon la revendication 12, comportant les étapes suivantes :
- traitement d'un mélange de tétrachlorure d'hafnium et de tétrachlorure de zirconium par de l'hexamethylbenzène en solution dans le toluène pendant 48h à température ambiante avec agitation pour obtenir un mélange de complexes: tétrachlorure de Zr/composé aromatique et tétrachlorure d'Hf/ composé aromatique en solution dans le toluène,
- refroidissement de la solution obtenue à l'étape précédente à 4°C,
- récupération du solide formé à l'étape précédente,
- évaporation du toluène afin d'obtenir un mélange de complexes,
- dissolution du mélange de complexes dans un mélange stœchiométrique de chlorure de méthylbutylimidazolium et de chlorure d' aluminium , et ajout de toluène pour obtenir un mélange réactionnel,
- ajout de pentane au mélange réactionnel pour former deux phases,
- séparation des deux phases par décantation et récupération du complexe ionique tétrachlorure d'Hf/ composé aromatique et du complexe moléculaire: tétrachlorure de Zr/composé aromatique.

## Patentansprüche

1. Verwendung einer ionischen Flüssigkeit, deren Schmelzpunkt weniger als 100 °C beträgt, und von nicht-nukleophilem anionischen Typ ist, unter wasserfreien Bedingungen zur Durchführung eines Verfahrens zur Trennung zwischen Hafniumtetrachlorid und Zirkoniumtetrachlorid ausgehend von einer Mischung von Komplexen: Zr-Tetrachlorid / aromatische Verbindung und Hf-Tetrachlorid / aromatische Verbindung, mittels Flüssig-Flüssig-Extraktion mit einer Zr / Hf - Anreicherung von mindestens 100/1 (ausgedrückt in Masse).

2. Verwendung einer ionischen Flüssigkeit nach Anspruch 1, wobei die Flüssig-Flüssig-Extraktion mit einem Kohlenwasserstoff oder einer Mischung von Kohlenwasserstoffen durchgeführt wird.

3. Verwendung einer ionischen Flüssigkeit nach einem der Ansprüche 1 oder 2, wobei die Temperatur weniger als ungefähr 100 ° C und insbesondere ungefähr 15 bis ungefähr 35 ° C beträgt.

4. Verwendung einer ionischen Flüssigkeit nach irgendeinem der Ansprüche 1 bis 3, wobei die aromatische Verbindung die folgende Formel aufweist: 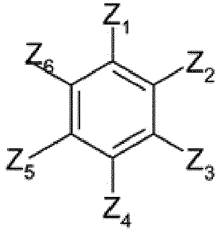 wobei Z₁, Z₂, Z₃, Z₄, Z₅ und Z₆ unabhängig voneinander darstellen:
- ein Wasserstoffatom,
- ein lineares oder verzweigtes Alkyl mit 1 bis 20, insbesondere 1 bis 12 Kohlenstoffatomen, oder
- ein Aryl.

5. Verwendung einer ionischen Flüssigkeit nach einem der Ansprüche 1 bis 4, wobei die ionische Flüssigkeit eine Mischung ist, die insbesondere stöchiometrisch von einem oder mehreren Ammoniumchloriden und einem oder mehreren Metallchloriden ist.

6. Verwendung einer ionischen Flüssigkeit nach Anspruch 5, wobei das oder die Metallchloride ausgewählt sind aus Aluminiumtrichlorid, Zinkchlorid, Zirkoniumtetrachlorid, Hafniumtetrachlorid, Eisen (II)-Chlorid, Eisen (III)-Chlorid, Bortrichlorid, Galliumtrichlorid, Kupfer (II)-Chlorid, Kupfer (I)-Chlorid, Titantetrachlorid, Cadmiumtrichlorid, Kobaltdichlorid, Zinndichlorid, Zinntetrachlorid, Antimontrichlorid oder Mischungen davon.

7. Verwendung der ionischen Flüssigkeit nach einem der Ansprüche 5 oder 6, wobei das oder die Ammoniumchloride ausgewählt sind aus:
- den Verbindungen der allgemeinen Formel NR1 R2R3⁺Cl⁻, wobei R1, R2 und R3 aliphatische, lineare oder verzweigte C1 bis C20-Gruppen sind,
- C5 bis C12 oder aromatischen Cycloalkanen,
- heterocyclischen Chloriden wie Pyridin und substituierten Pyridinen,
- Dipyridylen,
- mono-, di- oder trisubstituierten Imidazolium-Chloriden,
- Benzymidazolien und substituierten Benzymidazolien,
- Triazolien und substituierten Triazolien,
- Piperadizinien und substituierten Piperadizinien,
- Pyrrolidinien und substituierten Pyrrolidinien,
- Oxazolidinien und substituierten Oxazolidinien,
- Morpholinien und substituierten Morpholinien,
- Guanidinien und substituierten Guanidinien,
- Thiazolien und substituierten Thiazolien,
- Phosphonium-Chloriden und substituierten Phosphonium-Chloriden
- jedem anderen Stickstoff- oder Phosphorheterocyclus, der gegebenenfalls zusätzlich Sauerstoff- oder Schwefel-Atome enthält, und
- Mischungen davon.

8. Verwendung einer ionischen Flüssigkeit nach irgendeinem der Ansprüche 1 bis 7, wobei die ionische Flüssigkeit eine stöchiometrische Mischung von Methylbutylimidazoliumchlorid und Aluminiumchlorid ist.

9. Verwendung einer ionischen Flüssigkeit nach Anspruch 8, wobei der Kohlenwasserstoff ausgewählt ist aus:
- linearen oder verzweigten Alkanen mit 4 bis 12 Kohlenstoffatomen,
- Cycloalkanen und ihren substituierten mit 5 bis 12 Kohlenstoffatomen,
- durch Alkyl- und / oder Cycloalkylketten substituierte aromatische Gruppen, wobei die Alkylreste 1 bis 12 Kohlenstoffatome aufweisen und
- Mischungen davon.

10. Wasserfreie Lösung aufweisend:
- eine ionische Flüssigkeit, deren Schmelzpunkt weniger als 100 ° C beträgt, und
- eine Mischung von Komplexen: Zr-Tetrachlorid / aromatische Verbindung und Hf-Tetrachlorid / aromatische Verbindung, in Lösung in der ionischen Flüssigkeit,
wobei die aromatische Verbindung insbesondere die folgende Formel aufweist: 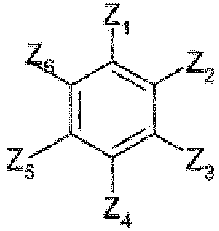 wobei Z₁, Z₂, Z₃, Z₄, Z₅ und Z₆ unabhängig voneinander darstellen:
- ein Wasserstoffatom,
- ein Alkyl mit 1 bis 20, insbesondere 1 bis 12 Kohlenstoffatomen, oder
- ein Aryl,
wobei die ionische Flüssigkeit insbesondere eine Mischung, insbesondere eine stöchiometrische Mischung von einem oder mehreren Ammoniumchloriden und einem oder mehreren Metallchloriden ist,
wobei das oder die Metallchloride ausgewählt sind aus Aluminiumtrichlorid, Zinkchlorid, Zirkoniumtetrachlorid, Hafniumtetrachlorid, Eisen (II)-Chlorid, Eisen (III)-Chlorid, Bortrichlorid, Galliumtrichlorid, Kupfer (II)-Chlorid, Kupfer (I)-Chlorid, Titantetrachlorid, Cadmiumtrichlorid, Kobaltdichlorid, Zinndichlorid, Zinntetrachlorid, Antimontrichlorid oder Mischungen davon und
wobei das oder die Ammoniumchloride ausgewählt sind aus:
- den Verbindungen der allgemeinen Formel NR1R2R3⁺Cl⁻, wobei R1, R2 und R3 aliphatische, lineare oder verzweigte Gruppen mit 1 bis 20 Kohlenstoffatomen sind,
- C5 bis C12 oder aromatischen Cycloalkanen,
- heterocyclischen Chloriden wie Pyridin und substituierten Pyridinen,
- Dipyridylen,
- mono-, di- oder trisubstituierten Imidazolium-Chloriden,
- Benzymidazolien und substituierten Benzymidazolien,
- Triazolien und substituierten Triazolien,
- Piperadizinien und substituierten Piperadizinien,
- Pyrrolidinien und substituierten Pyrrolidinien,
- Oxazolidinien und substituierten Oxazolidinien,
- Morpholinien und substituierten Morpholinien,
- Guanidinien und substituierten Guanidinien,
- Thiazolien und substituierten Thiazolien,
- Phosphonium-Chloriden und substituierten Phosphonium-Chloriden
- jedem anderen Stickstoff- oder Phosphorheterocyclus, der gegebenenfalls zusätzlich Sauerstoff- oder Schwefel-Atome enthält, und
- Mischungen davon.

11. Wasserfreies Reaktionsgemisch, aufweisend:
- eine ionische Flüssigkeit, deren Schmelzpunkt weniger als 100 ° C beträgt,
- einen Kohlenwasserstoff oder eine Mischung von Kohlenwasserstoffen, und
- eine Mischung von Komplexen: Zr-Tetrachlorid / aromatische Verbindung und Hf-Tetrachlorid / aromatische Verbindung,
wobei der Zr-Tetrachlorid / aromatische Verbindung-Komplex: Zr(Ar)Cl₂(µ-Cl)₃ZrCl₃, (wobei Ar eine aromatische Verbindung darstellt) in dem Kohlenwasserstoff oder in der Mischung von Kohlenwasserstoffen enthalten ist,
und der Hf-Tetrachlorid / aromatische Verbindung-Komplex: [Hf(Ar)Cl₃]⁺[Hf₂Cl₉] in der ionischen Flüssigkeit enthalten ist.
wobei die aromatische Verbindung insbesondere die folgende Formel aufweist: 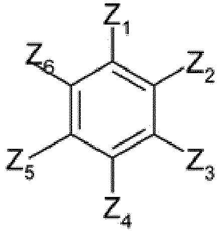 wobei Z₁, Z₂, Z₃, Z₄, Z₅ und Z₆ unabhängig voneinander darstellen:
- ein Wasserstoffatom,
- ein Alkyl mit 1 bis 20, insbesondere 1 bis 12 Kohlenstoffatomen, oder
- ein Aryl,
wobei die ionische Flüssigkeit insbesondere eine Mischung, insbesondere eine stöchiometrische Mischung von einem oder mehreren Ammoniumchloriden und einem oder mehreren Metallchloriden ist,
wobei das oder die Metallchloride ausgewählt sind aus Aluminiumtrichlorid, Zinkchlorid, Zirkoniumtetrachlorid, Hafniumtetrachlorid, Eisen (II)-Chlorid, Eisen (III)-Chlorid, Bortrichlorid, Galliumtrichlorid, Kupfer (II)-Chlorid, Kupfer (I)-Chlorid, Titantetrachlorid, Cadmiumtrichlorid, Kobaltdichlorid, Zinndichlorid, Zinntetrachlorid, Antimontrichlorid oder Mischungen davon und
wobei das oder die Ammoniumchloride ausgewählt sind aus:
- den Verbindungen der allgemeinen Formel NR1R2R3⁺Cl⁻, wobei R1, R2 und R3 aliphatische, lineare oder verzweigte Gruppen mit 1 bis 20 Kohlenstoffatomen sind,
- C5 bis C12 oder aromatischen Cycloalkanen,
- heterocyclischen Chloriden wie Pyridin und substituierten Pyridinen,
- Dipyridylen,
- mono-, di- oder trisubstituierten Imidazolium-Chloriden,
- Benzymidazolien und substituierten Benzymidazolien,
- Triazolien und substituierten Triazolien,
- Piperadizinien und substituierten Piperadizinien,
- Pyrrolidinien und substituierten Pyrrolidinien,
- Oxazolidinien und substituierten Oxazolidinien,
- Morpholinien und substituierten Morpholinien,
- Guanidinien und substituierten Guanidinien,
- Thiazolien und substituierten Thiazolien,
- Phosphonium-Chloriden und substituierten Phosphonium-Chloriden
- jedem anderen Stickstoff- oder Phosphorheterocyclus, der gegebenenfalls zusätzlich Sauerstoff- oder Schwefel-Atome enthält, und
- Mischungen davon,
wobei das Lösungsmittel insbesondere ein Kohlenwasserstoff oder eine Mischung von Kohlenwasserstoffen ist, insbesondere ausgewählt aus:
- linearen oder verzweigten Alkanen mit 1 bis 20 Kohlenstoffatomen,
- Cycloalkanen mit 5 bis 12 Kohlenstoffatomen und ihren substituierten,
- durch Alkyl- und / oder Cycloalkylketten substituierten aromatischen Gruppen, wobei die Alkylreste 1 bis 20 Kohlenstoffatome aufweisen und
- Mischungen davon.

12. Verfahren zur Trennung von Hafniumtetrachlorid und Zirkoniumtetrachlorid aufweisend die folgenden Schritte:
- Inkontaktbringen unter wasserfreien Bedingungen:
∘ einer Mischung von Komplexen: Zr-Tetrachlorid / aromatische Verbindung und Hf-Tetrachlorid / aromatische Verbindung mit einer ionischen Flüssigkeit, deren Schmelzpunkt weniger als 100 ° C beträgt,
wobei der Zr-Tetrachlorid / aromatische Verbindung-Komplex molekular ist und der Hf-Tetrachlorid / aromatische Verbindung-Komplex ionisch ist,
- Gewinnen des Zr-Tetrachlorid / aromatische Verbindung-Komplexes in einem
Lösungsmittel,
wobei das Lösungsmittel derart ist, dass
∘ es entweder die obige Mischung von Komplexen enthält, oder
∘ es gleichzeitig mit dem Inkontaktbringen der ionischen Flüssigkeit mit der obigen Mischung von Komplexen zu der Mischung von Komplexen gegeben wird, oder es nach dem Inkontaktbringen der ionischen Flüssigkeit mit der obigen Mischung von Komplexen zu der Mischung von Komplexen gegeben wird.

13. Verfahren nach Anspruch 12, wobei die Mischung von Komplexen: Zr-Tetrachlorid / aromatische Verbindung und Hf-Tetrachlorid / aromatische Verbindung in dem Lösungsmittel enthalten ist.

14. Verfahren nach Anspruch 12, wobei das Lösungsmittel gleichzeitig mit dem Inkontaktbringen der ionischen Flüssigkeit mit der obigen Mischung von Komplexen zu der Mischung von Komplexen gegeben wird.

15. Verfahren nach Anspruch 12, wobei das Lösungsmittel nach dem Inkontaktbringen der ionischen Flüssigkeit mit der obigen Mischung von Komplexen zu der Mischung von Komplexen gegeben wird.

16. Verfahren zur Abscheidung nach Anspruch 12 zwischen Hafniumtetrachlorid und Zirkoniumtetrachlorid, aufweisend die folgenden Schritte:
- Inkontaktbringen unter wasserfreien Bedingungen:
∘ einer Mischung von Komplexen: Zr-Tetrachlorid / aromatische Verbindung und Hf-Tetrachlorid / aromatische Verbindung mit einer ionischen Flüssigkeit,
wobei der Zr-Tetrachlorid / aromatische Verbindung-Komplex molekular ist und der Hf-Tetrachlorid / aromatische Verbindung-Komplex ionisch ist,
∘ wenn die Mischung von Komplexen kein Lösungsmittel enthält, Zugeben eines Lösungsmittels am Ende des vorhergehenden Schritts,
um ein wasserfreies Reaktionsgemisch zu erhalten, so dass:
- wenn die ionische Flüssigkeit nicht mit dem Lösungsmittel mischbar ist, das oben genannte Gemisch eine Phase aufweist, die das Lösungsmittel enthält, und eine Phase, die die ionische Flüssigkeit enthält, und
- wenn die ionische Flüssigkeit mit dem Lösungsmittel mischbar ist, das obige Gemisch ein zugesetztes Alkan enthält, das die Bildung einer Phase ermöglicht, die das Lösungsmittel aufweist, und einer Phase, die die ionische Flüssigkeit aufweist,
um auf diese Weise eine Flüssig-Flüssig-Extraktion durchzuführen,
∘ Gewinnen des in der ionischen Flüssigkeit gelösten ionischen Komplexes: Hf-Tetrachlorid / aromatische Verbindung und des molekularen Komplexes im Lösungsmittel: Zr-Tetrachlorid / aromatische Verbindung.

17. Verfahren nach irgendeinem der Ansprüche 12 bis 16, wobei das Gewinnen des molekularen Komplexes: Zr-Tetrachlorid / aromatische Verbindung in dem Lösungsmittel durch Dekantieren zwischen der Phase, die das Lösungsmittel enthält, und der Phase, die die ionische Flüssigkeit enthält, durchgeführt wird, wenn diese beiden Phasen nicht miteinander mischbar sind.

18. Verfahren nach irgendeinem der Ansprüche 12 bis 16, wobei das Gewinnen des molekularen Komplexes: Zr-Tetrachlorid / aromatische Verbindung in dem Lösungsmittel durch Zugabe eines Alkans, insbesondere Butans, Pentans erfolgt, was das Erhalten der Phase, die das Lösungsmittel aufweist, und der Phase, die die ionische Flüssigkeit aufweist, ermöglicht.

19. Verfahren nach irgendeinem der Ansprüche 12 bis 18, wobei dem Schritt des Inkontaktbringens der Mischung von Komplexen: Zr-Tetrachlorid / aromatische Verbindung und Hf-Tetrachlorid / aromatische Verbindung mit der ionischen Flüssigkeit ein Behandlungsschritt des Hafniumtetrachlorids und des Zirkoniumtetrachlorids mit einer aromatischen Verbindung vorausgeht, um die Mischung von Komplexen: Zr-Tetrachlorid / aromatische Verbindung und Hf-Tetrachlorid / aromatische Verbindung zu erhalten.

20. Verfahren nach einem der Ansprüche 12 bis 19, aufweisend einen Schritt des Entfernens der aromatischen Verbindung aus den Komplexen, insbesondere durch Vakuumdestillation und insbesondere durch Vakuumdestillation in Gegenwart eines Alkans.

21. Verfahren nach einem der Ansprüche 12 bis 20, wobei die aromatische Verbindung die folgende Formel aufweist: 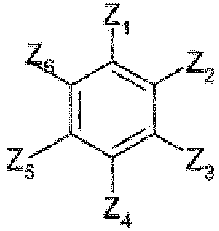 wobei Z₁, Z₂, Z₃, Z₄, Z₅ und Z₆ unabhängig voneinander darstellen:
- ein Wasserstoffatom,
- ein Alkyl mit 1 bis 20, insbesondere 1 bis 12 Kohlenstoffatomen, oder
- ein Aryl,
wobei die ionische Flüssigkeit eine Mischung, insbesondere eine stöchiometrische Mischung von einem oder mehreren Ammoniumchloriden und einem oder mehreren Metallchloriden ist,
wobei das oder die Metallchloride ausgewählt sind aus Aluminiumtrichlorid, Zinkchlorid, Zirkoniumtetrachlorid, Hafniumtetrachlorid, Eisen (II)-Chlorid, Eisen (III)-Chlorid, Bortrichlorid, Galliumtrichlorid, Kupfer (II)-Chlorid, Kupfer (I)-Chlorid, Titantetrachlorid, Cadmiumtrichlorid, Kobaltdichlorid, Zinndichlorid, Zinntetrachlorid, Antimontrichlorid oder Mischungen davon und
wobei das oder die Ammoniumchloride ausgewählt sind aus:
- den Verbindungen der allgemeinen Formel NR1R2R3⁺Cl⁻, wobei R1, R2 und R3 aliphatische, lineare oder verzweigte Gruppen mit 1 bis 20 Kohlenstoffatomen sind,
- Cycloalkanen mit 5 bis 12 Kohlenstoffatomen oder aromatischen Cycloalkanen,
- heterocyclischen Chloriden wie Pyridin und substituierten Pyridinen,
- Dipyridylen,
- mono-, di- oder trisubstituierten Imidazolium-Chloriden,
- Benzymidazolien und substituierten Benzymidazolien,
- Triazolien und substituierten Triazolien,
- Piperadizinien und substituierten Piperadizinien,
- Pyrrolidinien und substituierten Pyrrolidinien,
- Oxazolidinien und substituierten Oxazolidinien,
- Morpholinien und substituierten Morpholinien,
- Guanidinien und substituierten Guanidinien,
- Thiazolien und substituierten Thiazolien,
- Phosphonium-Chloriden und substituierten Phosphonium-Chloriden
- jedem anderen Stickstoff- oder Phosphorheterocyclus, der gegebenenfalls zusätzlich Sauerstoff- oder Schwefel-Atome enthält, und
- Mischungen davon,
wobei das Lösungsmittel insbesondere ein Kohlenwasserstoff oder eine Mischung von Kohlenwasserstoffen ist, insbesondere ausgewählt aus:
- linearen oder verzweigten Alkanen mit 1 bis 20 Kohlenstoffatomen,
- Cycloalkanen mit C5 bis C12 und ihren substituierten,
- durch Alkyl- und / oder Cycloalkylketten substituierten aromatischen Gruppen, wobei die Alkylreste 1 bis 20 Kohlenstoffatome aufweisen und
- Mischungen davon.

22. Verfahren nach Anspruch 12 aufweisend die folgenden Schritte:
- Behandeln einer Mischung von Hafniumtetrachlorid und Zirkoniumtetrachlorid mit Hexamethylbenzol, gelöst in Toluol, für 48 Stunden bei Raumtemperatur unter Rühren, um eine Mischung von Komplexen: Zr-Tetrachlorid / aromatische Verbindung und Hf-Tetrachlorid / aromatische Verbindung, gelöst in Toluol, zu erhalten,
- Abkühlen der im vorherigen Schritt erhaltenen Lösung auf 4 ° C,
- Gewinnen des im vorherigen Schritt gebildeten Feststoffs,
- Verdampfen des Toluols, um eine Mischung von Komplexen zu erhalten,
- Auflösen der Mischung von Komplexen in einer stöchiometrischen Mischung von Methylbutylimidazoliumchlorid und Aluminiumchlorid, und Zugeben von Toluol, um ein Reaktionsgemisch zu erhalten,
- Zugeben von Pentan zu dem Reaktionsgemisch, um zwei Phasen zu bilden,
- Trennen der beiden Phasen durch Dekantieren und Gewinnen des ionischen Hf-Tetrachlorid / aromatische Verbindung-Komplexes und des molekularen Zr-Tetrachlorid / aromatische Verbindung-Komplexes.

## Claims

1. Use of an ionic liquid whose melting point is below 100°C, and having a non-nucleophilic anion, under anhydrous conditions, for carrying out a method for separating hafnium tetrachloride and zirconium tetrachloride, starting from a mixture of complexes: Zr tetrachloride/aromatic compound and Hf tetrachloride/aromatic compound, by liquid-liquid extraction, with Zr/Hf enrichment of at least 100/1 (expressed by mass).

2. Use of an ionic liquid according to claim 1, wherein the liquid-liquid extraction is performed with a hydrocarbon or a mixture of hydrocarbons.

3. Use of an ionic liquid according to either claim 1 or claim 2, wherein the temperature is below approximately 100°C and is especially from approximately 15 to approximately 35°C.

4. Use of an ionic liquid according to any one of claims 1 to 3, wherein said aromatic compound has the following formula: 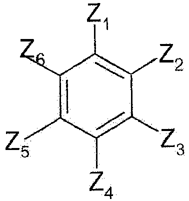 wherein Z₁, Z₂, Z₃, Z₄, Z₅ and Z₆ each independently of the others represents:
- a hydrogen atom,
- a linear or branched alkyl containing from 1 to 20, especially from 1 to 12, carbon atoms, or
- an aryl.

5. Use of an ionic liquid according to any one of claims 1 to 4, wherein said ionic liquid is a mixture, especially a stoichiometric mixture, of one or more ammonium chlorides and one or more metal chlorides.

6. Use of an ionic liquid according to claim 5, wherein the metal chloride(s) is/are chosen from aluminium trichloride, zinc chloride, zirconium tetrachloride, hafnium tetrachloride, ferrous chloride, ferric chloride, boron trichloride, gallium trichloride, cupric chloride, cuprous chloride, titanium tetrachloride, cadmium trichloride, cobalt dichloride, tin dichloride, tin tetrachloride, antimony trichloride or mixtures thereof.

7. Use of the ionic liquid according to either claim 5 or claim 6, wherein the ammonium chloride(s) is/are chosen from:
- compounds having the general formula NR1 R2R3⁺Cl⁻, R1, R2 and R3 being linear or branched C1 to C20 aliphatic groups,
- C5 to C12 cycloalkanes or aromatics,
- heterocyclic chlorides such as pyridine and substituted pyridines,
- dipyridyls,
- mono-, di- or tri-substituted imidazolium chlorides,
- benzymidazoliums and substituted benzymidazoliums,
- triazoliums and substituted triazoliums,
- piperadiziniums and substituted piperadiziniums,
- pyrrolidiniums and substituted pyrrolidiniums,
- oxazolidiniums and substituted oxazolidiniums,
- morpholiniums and substituted morpholiniums,
- guanidiniums and substituted guanidiniums,
- thiazoliums and substituted thiazoliums,
- phosphonium chlorides and substituted phosphonium chlorides,
- any other nitrogen- or phosphorus-containing heterocycle optionally further containing oxygen or sulfur atoms, and
- mixtures thereof.

8. Use of an ionic liquid according to any one of claims 1 to 7, wherein the ionic liquid is a stoichiometric mixture of methylbutylimidazolium chloride and aluminium chloride.

9. Use of an ionic liquid according to claim 8, wherein the hydrocarbon is chosen from:
- linear or branched alkanes having from 4 to 12 carbon atoms,
- cycloalkanes and substituted cycloalkanes having from 5 to 12 carbon atoms,
- aromatics substituted by alkyl and/or cycloalkyl chains, the alkyl radicals having from 1 to 12 carbon atoms, and
- mixtures thereof.

10. Anhydrous solution comprising:
- an ionic liquid whose melting point is below 100°C, and
- a mixture of complexes Zr tetrachloride/aromatic compound and Hf tetrachloride/aromatic compound, in solution in said aromatic liquid,
said aromatic having especially the following formula: 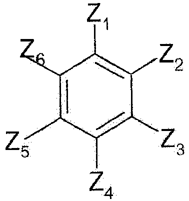 wherein Z₁, Z₂, Z₃, Z₄, Z₅ and Z₆ each independently of the others represents:
- a hydrogen atom,
- an alkyl containing from 1 to 20, especially from 1 to 12, carbon atoms, or
- an aryl,
said ionic liquid being in particular a mixture, especially a stoichiometric mixture, of one or more ammonium chlorides and one or more metal chlorides,
the metal chloride(s) being especially chosen from aluminium trichloride, zinc chloride, zirconium tetrachloride, hafnium tetrachloride, ferrous chloride, ferric chloride, boron trichloride, gallium trichloride, cupric chloride, cuprous chloride,
titanium tetrachloride, cadmium trichloride, cobalt dichloride, tin dichloride, tin tetrachloride, antimony trichloride or mixtures thereof, and
the ammonium chloride(s) being especially chosen from:
- compounds having the general formula NR1 R2R3⁺Cl⁻, R1, R2 and R3 being linear or branched aliphatic groups having from 1 to 20 carbon atoms,
- C5 to C12 cycloalkanes or aromatics,
- heterocyclic chlorides such as pyridine and substituted pyridines,
- dipyridyls,
- mono-, di- or tri-substituted imidazolium chlorides,
- benzymidazoliums and substituted benzymidazoliums,
- triazoliums and substituted triazoliums,
- piperadiziniums and substituted piperadiziniums,
- pyrrolidiniums and substituted pyrrolidiniums,
- oxazolidiniums and substituted oxazolidiniums,
- morpholiniums and substituted morpholiniums,
- guanidiniums and substituted guanidiniums,
- thiazoliums and substituted thiazoliums,
- phosphonium chlorides and substituted phosphonium chlorides,
- any other nitrogen- or phosphorus-containing heterocycle optionally further containing oxygen or sulfur atoms, and
- mixtures thereof.

11. Anhydrous reaction mixture comprising:
- an ionic liquid whose melting point is below 100°C,
- a hydrocarbon or a mixture of hydrocarbons, and
- a mixture of complexes: Zr tetrachloride/aromatic compound and Hf tetrachloride/aromatic compound,
the complex Zr tetrachloride/aromatic compound: Zr(Ar)Cl₂(µ-Cl)₃ZrCl₃ (Ar representing an aromatic) being in the hydrocarbon or the mixture of hydrocarbons, and the complex Hf tetrachloride/aromatic compound: [Hf(Ar)Cl₃]⁺[Hf₂Cl₉] being in the ionic liquid,
said aromatic having especially the following formula: 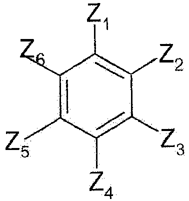 wherein Z₁, Z₂, Z₃, Z₄, Z₅ and Z₆ each independently of the others represents:
- a hydrogen atom,
- an alkyl containing from 1 to 20, especially from 1 to 12, carbon atoms, or
- an aryl,
said ionic liquid being in particular a mixture, especially a stoichiometric mixture, of one or more ammonium chlorides and one or more metal chlorides,
the metal chloride(s) being especially chosen from aluminium trichloride, zinc chloride, zirconium tetrachloride, hafnium tetrachloride, ferrous chloride, ferric chloride, boron trichloride, gallium trichloride, cupric chloride, cuprous chloride,
titanium tetrachloride, cadmium trichloride, cobalt dichloride, tin dichloride, tin tetrachloride, antimony trichloride or mixtures thereof,
the ammonium chloride(s) being especially chosen from:
- compounds having the general formula NR1R2R3⁺Cl⁻, R1, R2 and R3 being linear or branched aliphatic groups having from 1 to 20 carbon atoms,
- cycloalkanes or aromatics, having from 5 to 12 carbon atoms,
- heterocyclic chlorides such as pyridine and substituted pyridines, dipyridyls,
- mono-, di- or tri-substituted imidazolium chlorides,
- benzymidazoliums and substituted benzymidazoliums,
- triazoliums and substituted triazoliums,
- piperadiziniums and substituted piperadiziniums,
- pyrrolidiniums and substituted pyrrolidiniums,
- oxazolidiniums and substituted oxazolidiniums,
- morpholiniums and substituted morpholiniums,
- guanidiniums and substituted guanidiniums,
- thiazoliums and substituted thiazoliums,
- phosphonium chlorides and substituted phosphonium chlorides, any other nitrogen- or phosphorus-containing heterocycle optionally further containing oxygen or sulfur atoms, and
- mixtures thereof,
said solvent being especially a hydrocarbon or a mixture of hydrocarbons, in particular chosen from:
- linear or branched alkanes having from 1 to 20 carbon atoms,
- cycloalkanes and substituted cycloalkanes having from 5 to 12 carbon atoms,
- aromatics substituted by alkyl and/or cycloalkyl chains, the alkyl groups having from 1 to 20 carbon atoms,
- mixtures thereof.

12. Method for separating hafnium tetrachloride and zirconium tetrachloride, comprising the following steps:
- bringing into contact, under anhydrous conditions:
∘ a mixture of complexes: Zr tetrachloride/aromatic compound and Hf tetrachloride/aromatic compound with an ionic liquid whose melting point is below 100°C,
the complex Zr tetrachloride/aromatic compound being molecular and the complex Hf tetrachloride/aromatic compound being ionic,
- recovering the complex Zr tetrachloride/aromatic compound in a solvent, said solvent being such that:
∘ either it contains the above-mentioned mixture of complexes,
∘ or it is added to the mixture of complexes at the same time as the ionic liquid is brought into contact with the above-mentioned mixture of complexes, or it is added to the mixture of complexes after the ionic liquid has been brought into contact with the above-mentioned mixture of complexes.

13. Method according to claim 12, wherein the mixture of complexes: Zr tetrachloride/aromatic compound and Hf tetrachloride/aromatic compound is contained in the solvent.

14. Method according to claim 12, wherein the solvent is added to the mixture of complexes at the same time as the ionic liquid is brought into contact with the mixture of complexes.

15. Method according to claim 12, wherein the solvent is added to the mixture of complexes after the ionic liquid has been brought into contact with the mixture of complexes.

16. Method according to claim 12 for separating hafnium tetrachloride and zirconium tetrachloride, comprising the following steps:
- bringing into contact, under anhydrous conditions:
∘ a mixture of complexes: Zr tetrachloride/aromatic compound and Hf tetrachloride/aromatic compound with an ionic liquid,
the Zr tetrachloride/aromatic compound complex being molecular and the Hf tetrachloride/aromatic compound complex being ionic,
∘ if the mixture of complexes does not contain a solvent, adding a solvent following the preceding step,
to obtain an anhydrous reaction mixture such that:
- if the ionic liquid is not miscible with the solvent, the above-mentioned mixture contains a phase comprising the solvent and a phase comprising the ionic liquid,
- and if the ionic liquid is miscible with the solvent, the above-mentioned mixture contains an added alkane permitting the formation of a phase comprising the solvent and a phase comprising the ionic liquid,
and to thus perform a liquid-liquid extraction
∘ recovery of the ionic complex: Hf tetrachloride/aromatic compound solubilised in the ionic liquid, and recovery of the molecular complex: Zr tetrachloride/aromatic compound in the solvent.

17. Method according to any one of claims 12 to 16, wherein the recovery of the molecular complex: Zr tetrachloride/aromatic compound in the solvent is carried out by decantation between the phase comprising the solvent and the phase comprising the ionic liquid, when those two phases are not miscible with one another.

18. Method according to any one of claims 12 to 16, wherein the recovery of the molecular complex Zr tetrachloride/aromatic compound in the solvent is carried out by addition of an alkane, especially butane, pentane, allowing the phase comprising the solvent and the phase comprising the ionic liquid to be obtained.

19. Method according to any one of claims 12 to 18, wherein the step of bringing into contact the mixture of complexes: Zr tetrachloride/aromatic compound and Hf tetrachloride/aromatic compound with the ionic liquid is preceded by a step of treating the hafnium tetrachloride and the zirconium tetrachloride with an aromatic compound in order to obtain the mixture of complexes: Zr tetrachloride/aromatic compound and Hf tetrachloride/aromatic compound.

20. Method according to any one of claims 12 to 19, comprising a step of removing the aromatic compound from said complexes, especially by distillation *in vacuo* and in particular by distillation *in vacuo* in the presence of an alkane.

21. Method according to any one of claims 12 to 20, wherein said aromatic has the following formula: 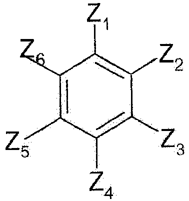 wherein Z₁, Z₂, Z₃, Z₄, Z₅ and Z₆ each independently of the others represents:
- a hydrogen atom, or
- an alkyl containing from 1 to 12 carbon atoms, or
- an aryl,
wherein said ionic liquid is a mixture, especially a stoichiometric mixture, of one or more ammonium chlorides and one or more metal chlorides,
the metal chloride(s) being especially chosen from aluminium trichloride, zinc chloride, zirconium tetrachloride, hafnium tetrachloride, ferrous chloride, ferric chloride, boron trichloride, gallium trichloride, cupric chloride, cuprous chloride, titanium tetrachloride, cadmium trichloride, cobalt dichloride, tin dichloride, tin tetrachloride, antimony trichloride or mixtures thereof,
the ammonium chloride or the plurality of ammonium chlorides being especially chosen from:
- compounds having the general formula NR1 R2R3⁺Cl⁻, R1, R2 and R3 being linear or branched aliphatic groups having from 1 to 20 carbon atoms,
- cycloalkanes having from 5 to 12 carbon atoms or aromatics,
- heterocyclic chlorides such as pyridine and substituted pyridines,
- dipyridyls,
- mono-, di- or tri-substituted imidazolium chlorides,
- benzymidazoliums and substituted benzymidazoliums,
- triazoliums and substituted triazoliums,
- piperadiziniums and substituted piperadiziniums,
- pyrrolidiniums and substituted pyrrolidiniums,
- oxazolidiniums and substituted oxazolidiniums,
- morpholiniums and substituted morpholiniums,
- guanidiniums and substituted guanidiniums,
- thiazoliums and substituted thiazoliums,
- phosphonium chlorides and substituted phosphonium chlorides,
- any other nitrogen- or phosphorus-containing heterocycle optionally further containing oxygen or sulfur atoms, and
- mixtures thereof,
said solvent being especially a hydrocarbon or a mixture of hydrocarbons especially chosen from:
- linear or branched alkanes having from 1 to 20 carbon atoms,
- C5 to C12 cycloalkanes and substituted C5 to C12 cycloalkanes,
- aromatics substituted by alkyl and/or cycloalkyl chains, the alkyl groups having from 1 to 20 carbon atoms, and
- mixtures thereof.

22. Method according to claim 12, comprising the following steps:
- treating a mixture of hafnium tetrachloride and zirconium tetrachloride with hexamethylbenzene in solution in toluene for 48 hours at ambient temperature with stirring in order to obtain a mixture of complexes: Zr tetrachloride/aromatic compound and Hf tetrachloride/aromatic compound in solution in toluene,
- cooling the solution obtained in the preceding step to 4°C,
- recovering the solid formed in the preceding step,
- evaporating the toluene in order to obtain a mixture of complexes,
- dissolving the mixture of complexes in a stoichiometric mixture of methylbutylimidazolium chloride and aluminium chloride, and adding toluene in order to obtain a reaction mixture,
- adding pentane to the reaction mixture in order to form two phases,
- separating the two phases by decantation and recovering the ionic complex Hf tetrachloride/aromatic compound and the molecular complex: Zr tetrachloride/aromatic compound.
